# FASCICULE DE BREVET EUROPEEN

(11) **EP 0 670 816 B1**
(45) Date de publication et mention de la délivrance du brevet: **21.08.1996**
(21) Numéro de dépôt: 94900870.0
(22) Date de dépôt: 24.11.1993
(51) Int. Cl.: C02F 1/78, C02F 1/72

(54) **INSTALLATION POUR L'ELIMINATION DES MICROPOLLUANTS DES EAUX BRUTES NOTAMMENT DES EAUX DE FORAGE, PAR ACTION COMBINEE D'OZONE ET DE PEROXYDE D'HYDROGENE**
ANLAGE ZUR ENTFERNUNG VON MIRKO-SCHADSTOFFEN AUS ROHWASSER, INSBESONDERE AUS BOHRSPÜLWASSER MITTELS OZON UND WASSERSTOFFPEROXID
PLANT FOR REMOVING MICROPOLLUTANTS FROM UNTREATED WATER, PARTICULARLY DRILLING WATER, BY MEANS OF A COMBINATION OF OZONE AND HYDROGEN PEROXIDE

(30) Priorité: 24.11.1992 FR 9214427
(43) Date de publication de la demande: 13.09.1995
(73) Titulaire: TRAILIGAZ, F-95145 Garges-Les-Gonesse (FR)
(72) Inventeur: MARTIN, Nathalie, F-75013 Paris (FR)
(74) Mandataire: Vidon, Patrice
(86) Numéro de dépôt international: FR9301155
(87) Numéro de publication internationale: WO9412437

(56) Documents cités:
- EP-A- 0 144 952
- EP-A- 0 244 565
- EP-A- 0 287 205
- EP-A- 0 495 707
- DE-A- 2 020 800
- DE-A- 2 045 603
- DE-A- 3 830 999
- FR-A- 2 563 208

## Description

Le domaine de l'invention est celui du traitement des eaux brutes. Plus précisément, l'invention concerne l'élimination ou, à tout le moins, le fort abattement de la micro-pollution contenue dans les eaux brutes et notamment dans les eaux de forage.

Les eaux brutes contiennent peu de matières organiques colloïdales et il est donc généralement inutile de leur faire subir un traitement constitué par une succession d'étapes du type floculation-décantation-filtration. Par contre, ces eaux brutes sont très généralement chargées en micro-polluants et peuvent contenir des micro-organismes ou encore des composés minéraux réduits (fer ferreux, manganèse ...).

L'élimination des micro-polluants peut être effectuée par exemple par stripping aération forcée s'ils sont volatils ou par adsorption sur charbon actif ou sur d'autres types de matériaux tels que des résines échangeuses d'ions ou encore par séparation physique avec des procédés à membrane nanofiltration, osmose inverse. Tous ces derniers procédés peuvent être très efficaces mais présentent l'inconvénient de ne pas détruire la pollution mais seulement de la retenir.

Il est donc apparu nécessaire d'utiliser des techniques oxydantes pour éliminer, ou pour abattre fortement, la teneur de ces eaux brutes en micro-polluants. Bien que certaines techniques de l'état de l'art consistent à utiliser le chlore ou le bioxyde de chlore, l'ozone est apparu comme étant l'oxydant le plus intéressant, car capable de détruire complètement la matière organique en la minéralisant en CO₂ et en sels minéraux sous certaines conditions de mise en oeuvre.

L'ozone est ainsi utilisé pour la dépollution d'eau faiblement chargée en polluants organiques et notamment dans le cadre de la potabilisation de l'eau de consommation. La molécule d'ozone autorise en effet des réactions radicalaires impliquant le radical OH^{•} permettant d'oxyder fortement la matière organique.

Un des problèmes important rencontré dans le cadre du traitement des eaux brutes en vue notamment de leur potabilisation consiste en la présence dans celles-ci de micropolluants organiques particuliers constitués par les pesticides insecticides, fongicides, herbicides, rodenticides. En effet, ces composés organiques ne peuvent floculer et sont difficilement éliminés par les moyens d'oxydation classiques. Ces micropolluants présentant, même à faible dose, une toxicité élevée, l'une des priorités du traitement des eaux est de pousser leur élimination le plus loin possible.

Parmi ces composés, on note par exemple la présence fréquente dans les eaux de forage d'atrazine et de simazine qui sont des herbicides.

L'atrazine est constitué par la chloro-2-éthylamino-Gisopropylamino-6 s-triazine. La molécule de simazine est la chloro-2- bis éthylamino)-4,6s-triazine.

L'abattement de ces composés pesticides au cours d'étape classique de floculation-décantation est très faible et de l'ordre de 5% en moyenne. Après l'opération de filtration rapide sur sable, l'abattement atteint 20% en moyenne. L'utilisation d'une unité d'ozonation après un filtre à sable utilisant un taux de traitement faible de l'ordre de 0,85mg O₃/l conduit à un abattement final de 30%. Cet abattement final ne permet fréquemment pas d'atteindre les normes prescrites pour la potabilisation de l'eau qui, dans le cas de l'atrazine sont de 0,1µg/l. Il faut donc avoir recours à un taux d'ozone supérieur. Un taux d'ozone de 4mg O₃/l permet d'abattre la concentration en atrazine de 60%. Bien que l'on puisse encore améliorer cet abattement en augmentant encore le taux d'ozone injecté dans les eaux à traiter, on se heurte alors à des problèmes de coût et surtout à des problèmes concernant l'élimination des résiduels d'ozone dans les eaux traitées. Il est alors nécessaire de prolonger le temps de contact de l'eau ozonée sortant des unités d'ozonation par exemple en faisant passer celles-ci dans des colonnes de contact favorisant le dégazage de ces résiduels d'ozone. A titre d'exemple, il peut être nécessaire, après un temps de contact dans les unités d'ozonation de l'état de la technique de deux minutes, de prolonger le temps de contact durant huit minutes en faisant passer les eaux ozonées dans un réacteur de dimensions importantes afin que les résiduels d'ozone contenus dans celles-ci puissent être essentiellement éliminés.

On connaît déjà dans l'état de la technique des installations de désinfection par ozone munis de contacteurs à diffusion d'ozone par poreux. De telles installations présentent de nombreux inconvénients, dus essentiellement à la dégradation des poreux dans le temps. De plus, et comme mentionné ci-dessus, il est nécessaire, pour assurer le temps de contact minimal nécessaire pour la totalité du liquide à traiter, de maintenir un temps de passage moyen important dans les réacteurs. Cela nécessite notamment des ouvrages surdimensionnés, onéreux et consommateurs d'espace.

Par ailleurs, un autre problème présenté par les réacteurs d'ozonation à poreux réside dans le fait qu'ils peuvent induire un manque d'homogénéité de la concentration en ozone dans les eaux à traiter.

L'invention a pour objectif de pallier les inconvénients des réacteurs d'ozonation de l'état de la technique utilisés pour dépolluer les eaux brutes.

Le principal objectif de l'invention est ainsi de permettre l'élimination poussée des micro-polluants, et plus particulièrement des pesticides organiques, des eaux brutes telles que les eaux de forage grâce à des oxydants, tout en réduisant le temps de contact des eaux traitées avec lesdits oxydants et, concomitamment, en obtenant un taux résiduel de produits oxydants faible dans les eaux traitées. En d'autres termes, l'un des objectifs de la présente invention est de fournir une installation de traitement par oxydation d'eaux brutes dans laquelle l'opération de mise en contact des produits oxydants avec les eaux à traiter est optimisée.

L'invention a également pour objectif de fournir une installation à rendement élevé permettant de réduire considérablement le dimensionnement des installations de génie civil classiquement utilisées dans le traitement des eaux brutes, voire de supprimer complètement ces installations.

Un autre objectif de l'invention est de fournir une installation de traitement à temps minimisé de passage du liquide à traiter dans un réacteur, tout en permettant une bonne élimination de la micro-pollution.

Encore un autre objectif de l'invention est de proposer une installation permettant l'élimination de la micro-pollution des eaux brutes telles que les eaux de forage, pouvant être utilisée dans une large gamme de débit desdites eaux.

Ces objectifs, ainsi que d'autres qui apparaîtront par la suite, sont atteints grâce à une installation pour le traitement des eaux brutes, notamment des eaux de forage, permettant d'éliminer au moins partiellement les micropolluants contenus dans lesdites eaux, caractérisée en ce qu'elle comprend:
- au moins une canalisation principale d'amenée desdites eaux dans la partie inférieure d'un réacteur, l'extrémité de la canalisation abouchant dans ledit réacteur formant un déversoir noyé ;
- des moyens d'injection d'ozone dans lesdites eaux communiquant avec ladite canalisation principale ;
- des moyens d'injection de peroxyde d'hydrogène dans lesdites eaux communiquant avec ladite canalisation principale ;
- au moins un système de transfert de gaz-liquide comprenant au moins un mélangeur statique, ledit mélangeur statique étant situé en aval desdits moyens d'injection d'ozone et desdits moyens d'injection de peroxyde d'hydrogène et en amont dudit réacteur ; et
- des moyens permettant d'équirépartir le débit des eaux résurgentes de ladite canalisation d'amenée au niveau du déversoir, lesdits moyens d'équirépartition autorisant une diminution de l'énergie cinétique desdites eaux lors de leur arrivée dans ledit réacteur.

L'invention consiste donc à utiliser le couple oxydant ozone/peroxyde d'hydrogène pour le traitement d'eaux brutes, dans une installation incluant un système de transfert gaz-liquide permettant l'homogénéisation, en amont du réacteur, de ces oxydants avec les eaux à traiter.

Le peroxyde d'hydrogène comporte un pont peroxyde -O-O- caractéristique des percomposés. Cependant, ses propriétés oxydantes ne résultent pas de la présence d'un atome d'oxygène actif dans la molécule. En effet, sa réactivité le classe dans la catégorie des oxydants faibles, que ce soit en solution aqueuse ou en milieu anhydre. Par contre, comme tous les peroxydes, il a la possibilité de participer à des réactions radicalaires susceptibles d'activer la production d'entités oxydantes par rupture de la liaison peroxydique.

Bien qu'il soit connu que le peroxyde d'hydrogène, communément appelé eau oxygénée, est un oxydant puissant de la matière organique, celui-ci n'a jamais été utilisé, à la connaissance de la demanderesse, dans le cadre d'une installation de traitement des eaux brutes, pour être injecté en combinaison avec l'ozone en amont d'un petit volume de contact avec lesdites eaux.

Selon l'invention, le traitement des eaux brutes en vue d'éliminer les micro-polluants qu'elles contiennent ou d'abattre fortement la teneur de celles-ci en ces composés est ainsi divisé en trois étapes : l'adjonction du couple oxydant ozone/peroxyde d'hydrogène aux eaux brutes en amont du réacteur et plus précisément au niveau de la canalisation d'amenée des eaux brutes, l'homogénéisation du mélange eaux brutes-produits oxydants au niveau de mélangeur statique du système de transfert gaz-liquide, toujours en amont du réacteur et le dégazage dans ledit réacteur.

Ainsi, grâce à l'architecture de l'installation selon la présente invention, il est possible de raccourcir notablement le temps de traitement des eaux brutes en vue de les décharger des micro-polluants qu'elle contiennent. D'une part grâce à l'utilisation combinée de deux oxydants puissants à l'origine de réactions radicalaires, à savoir l'ozone et le peroxyde d'hydrogène et d'autre part par la mise en contact des produits oxydants avec les eaux brutes non pas au niveau du réacteur mais prématurément, au niveau de la canalisation d'amenée des eaux brutes à traiter vers le réacteur. La séparation gaz-liquide se produit donc dès l'entrée des eaux ozonées dans le réacteur. Conséquemment, le temps de passage de ces eaux ozonées dans ledit réacteur est à lui seul suffisant pour permettre un dégazage efficace et ainsi pour réduire ou même supprimer l'installation de génie civil classiquement utilisé dans les installations de l'état de la technique pour augmenter le temps de contact de l'ozone avec les eaux traitées et pour autoriser une diminution acceptable des quantités résiduelles d'ozone dans celles-ci.

L'installation selon l'invention permet ainsi de réduire considérablement le coût des unités de traitement des eaux brutes puisqu'une partie importante de celles-ci, à savoir le génie civil nécessaire jusqu'alors pour accroître le temps de contact des eaux et de l'ozone et pour réduire la quantité d'ozone résiduel dans les eaux traitées, devient au moins partiellement inutile.

Par ailleurs, la forte turbulence occasionnée dans les eaux de traitement par le ou les mélangeurs statiques de la présente installation, permet de fragiliser nombre de micro-organismes présents dans les eaux brutes et ainsi de collaborer à leur destruction, parallèlement à l'action du couple oxydant ozone/peroxyde d'hydrogène.

Les moyens d'équirépartition du débit ont pour objet de "casser" le jet d'eaux brutes sortant de la canalisation principale d'amenée de ces eaux dans le réacteur, canalisation qui débouche généralement dans l'axe et dans la partie inférieure de celui-ci. L'énergie cinétique de ces eaux étant dissipée, la répartition du débit dans la partie supérieure du réacteur est bonne. Une telle répartition du débit des eaux est utile pour homogénéiser le traitement des eaux et éviter la concentration ponctuelle d'oxydants afin de permettre un meilleur dégazage.

Préférentiellement, lesdits moyens d'équirépartition sont constitués par une plaque noyée fixée au-dessus dudit déversoir essentiellement perpendiculairement à la direction d'arrivée des eaux dans ledit réacteur, ladite plaque présentant d'une part une largeur sensiblement égale à la largeur dudit réacteur et présentant d'autre part une partie centrale pleine et une couronne périphérique ajourée, ladite partie centrale pleine étant placée essentiellement en regard de ladite canalisation d'amenée des eaux dans ledit réacteur. La distance séparant l'extrémité de la canalisation principale d'amenée des eaux ozonées dans le réacteur de la plaque noyée est calculée de façon à optimiser l'équirépartition des débits. En conséquence une telle plaque ne doit pas être placée trop près de la canalisation principale afin de ne pas provoquer de reflux des eaux dans celle-ci, ni trop loin afin de remplir son rôle consistant à briser la force des eaux résurgentes de cette canalisation.

Avantageusement, ladite partie centrale de ladite plaque noyée présente un diamètre sensiblement égal à celui de ladite canalisation d'amenée des eaux dans ledit réacteur.

Selon une variante préférentielle de l'invention, lesdits moyens d'injection de peroxyde d'hydrogène sont placés en amont desdits moyens d'injection d'ozone, de façon telle que l'injection de peroxyde d'hydrogène puisse être effectuée sur les eaux brutes non-ozonées.

Egalement avantageusement, l'installation comprend une boucle de dérivation communiquant avec ladite canalisation principale d'amenée desdites eaux dans ledit réacteur, ladite boucle constituant une canalisation auxiliaire d'amenée desdites eaux dans ledit réacteur, ladite canalisation auxiliaire assurant l'amenée desdites eaux dans ledit réacteur jusqu'à une valeur seuil de débit de celles-ci, ladite canalisation principale assurant l'amenée desdites eaux dans ledit réacteur dès que le débit desdites eaux est supérieur audit seuil.

Selon un mode de mise en oeuvre de l'invention, lesdits moyens d'injection d'ozone sont installés au niveau de ladite canalisation auxiliaire.

Préférentiellement, lesdits moyens d'injection d'ozone et lesdits moyens d'injection de peroxyde d'hydrogène permettent l'injection de ces deux composés dans lesdites eaux selon un ratio pondéral H₂O₂/O₃ constant.

Avantageusement, ledit ratio pondéral H₂O₂/O₃ est au moins égal à 0,3 g/g.

Selon un aspect préférentiel de l'invention, l'installation comprend une unité de filtration positionnée en aval dudit réacteur, ladite unité de filtration permettant d'accroître le taux d'élimination des micropolluants dans les eaux traitées. Ladite unité de filtration, qui présente un rôle complémentaire dans l'élimination des micro-polluants, peut avantageusement comprendre une ou plusieurs couches de charbon actif en grains, la micro-pollution résiduelle contenue dans les eaux sortant dudit réacteur pouvant alors être retenue par adsorption sur lesdits grains. Une telle filtration sur charbon actif permet un affinage complémentaire de l'eau, en achevant en même temps un filtration physique et biologique.

Selon un mode de réalisation, ladite unité de filtration peut être positionnée de façon cocylindrique audit réacteur, ledit réacteur formant alors une première chambre centrale et ladite unité de filtration formant une seconde chambre annulaire.

Que l'unité de filtration soit construite de façon cocylindrique ou non audit réacteur, il peut être envisagé plusieurs variantes de circulation des eaux traitées dans ces deux modules. Ainsi, l'unité de filtration et le réacteur pourront être conçus de façon que les eaux puissent observer un mouvement ascendant dans le réacteur et un mouvement descendant dans l'unité de filtration, l'extrémité de ladite canalisation d'amenée abouchant alors dans la partie inférieure dudit réacteur et en ledit réacteur étant équipé dans sa partie supérieure d'un déversoir permettant d'amener les eaux brutes traitées dans ledit réacteur vers ladite unité de filtration. Dans un tel mode de réalisation la canalisation d'amenée des eaux pourra arriver dans le réacteur par le haut de celui-ci ou par le bas de celui-ci.

Selon un autre mode de réalisation, il pourra être inculqué un mouvement descendant des eaux dans le réacteur et un mouvement ascendant de celles-ci dans l'unité complémentaire de filtration. A cet effet, l'extrémité de la canalisation d'amenée des eaux ozonées dans le réacteur sera installé dans la partie supérieure du réacteur et le passage des eaux sortant de ce réacteur vers l'unité de filtration sera organisé dans le fond de celui-ci.

Dans ce cas de figure également, la canalisation d'amenée des eaux pourra arriver dans le réacteur par le haut de celui-ci ou par le bas de celui-ci.

Enfin, il pourra également être envisagé, selon une autre variante de réalisation de l'installation selon la présente invention de concevoir ledit réacteur et ladite unité de filtration de façon à conférer aux eaux un mouvement descendant dans ledit réacteur et également un mouvement descendant dans l'unité complémentaire de filtration, ou encore un mouvement ascendant dans les deux unités, la paroi séparant le réacteur de l'unité de filtration formant alors une paroi siphoïde.

Egalement selon une variante de l'invention, lesdits moyens d'injection de peroxyde d'hydrogène comprennent un organe de dilution dynamique ou statique permettant d'injecter du peroxyde d'hydrogène dilué dans lesdites eaux.

Selon une autre variante, lesdits moyens d'injection de peroxyde d'hydrogène autorisent l'injection de peroxyde d'hydrogène concentré dans lesdites eaux.

Lorsque l'eau brute à traiter comprend également d'autres polluants que les pesticides, tels que des composés minéraux réduits (fer, manganèse, ...) il est intéressant d'introduire au moins une substance floculante dans le réacteur afin de faire floculer ces composés, tout en autorisant leur oxydation grâce aux micro-bulles d'ozone formées au sein du réacteur.

Pour atteindre ce but, l'installation comprend préférentiellement
- des moyens de production d'eau sursaturée en ozone,
- des moyens d'introduction de l'eau sursaturée formée et d'au moins une substance coagulante dans le réacteur, et,
- des moyens d'évacuation des flocs formés à la surface du réacteur.

L'introduction d'eau sursaturée en ozone dans le réacteur permet, par détente, la réalisation de micro-bulles d'ozone qui, combinées à l'action de la substance coagulante conduisent à la flottation des polluants.

Les moyens d'évacuation des flocs permettent d'empêcher le colmatage de filtres de ladite unité de filtration.

Selon une variante de l'invention, l'installation inclut préférentiellement des moyens de mise sous pression de l'eau à traiter dans ledit réacteur, travaillant alors sous pression, et éventuellement dans ladite unité de filtration. De tels moyens permettent d'éviter le repompage de l'eau traitée classiquement mis en oeuvre sur une installation incluant une unité d'ozonation et une unité de filtration classique.

Selon encore une autre variante de réalisation de l'invention, l'installation comprend des moyens de sursaturation en ozone de l'eau traitée sortant de ladite installation et des moyens d'injection d'eau sursaturée en ozone dans l'eau. Un tel mode de réalisation est particulièrement intéressant lorsque l'installation ne comprend pas d'unité de filtration et que l'on souhaite réinjecter de l'ozone, par exemple en complément à des fins de désinfection. L'installation comprend ainsi deux points d'injection d'ozone, l'un à l'entrée du réacteur, l'autre à un autre point. On notera également que l'on pourra aussi envisager de réinjecter du peroxyde d'hydrogène à la sortie du réacteur. Ceci constitue un traitement étagé assurant un parfait traitement de tout le débit d'eau.

D'autres caractéristiques et avantages de l'invention apparaîtront à la lecture de la description suivante de modes de mise en oeuvre préférentiels de l'installation de l'invention, présentés à titre illustratif et non limitatif, et des dessins annexés, dans lesquels :
- la figure 1 présente une vue du schéma de principe d'une installation pour l'élimination des micro-polluants des eaux brutes selon la présente invention;
- la figure 2 représente une vue de dessus des moyens d'équirépartition du débit des eaux ozonées abouchant dans le réacteur des installations représentées aux figures 1, et 3 à 5 ;
- la figure 3 représente une vue latérale d'un mode de réalisation d'une installation selon l'invention, incluant un génie civil de faibles dimensions en sortie de réacteur ;
- la figure 4 représente une vue de dessus de l'installation représentée à la figure 3 ;
- la figure 5 représente un deuxième mode de réalisation d'une installation selon la présente invention incluant une chambre annulaire de filtration venant compléter l'élimination de la micro-pollution des eaux traitées dans le réacteur;
- la figure 6 représente un troisième mode de réalisation d'une installation selon la présente invention incluant également une chambre cocylindrique de filtration,
- la figure 7 représente un quatrième mode de réalisation d'une installation selon l'invention dans laquelle des moyens sont prévus pour faire flotter certains polluants présents dans les eaux traitées dans le réacteur,
- la figure 8 représente un cinquième mode de réalisation d'une installation selon l'invention dans laquelle des moyens de réinjection d'ozone sont prévus à la sortie du réacteur.

Le principe de base de l'invention consiste à traiter à la fois les eaux brutes à l'aide d'ozone et de peroxyde d'hydrogène en introduisant ces composés oxydants en amont de leur arrivée dans un réacteur et en organisant le mélange de ces eaux avec ces composés également en amont de leur arrivée dans le réacteur.

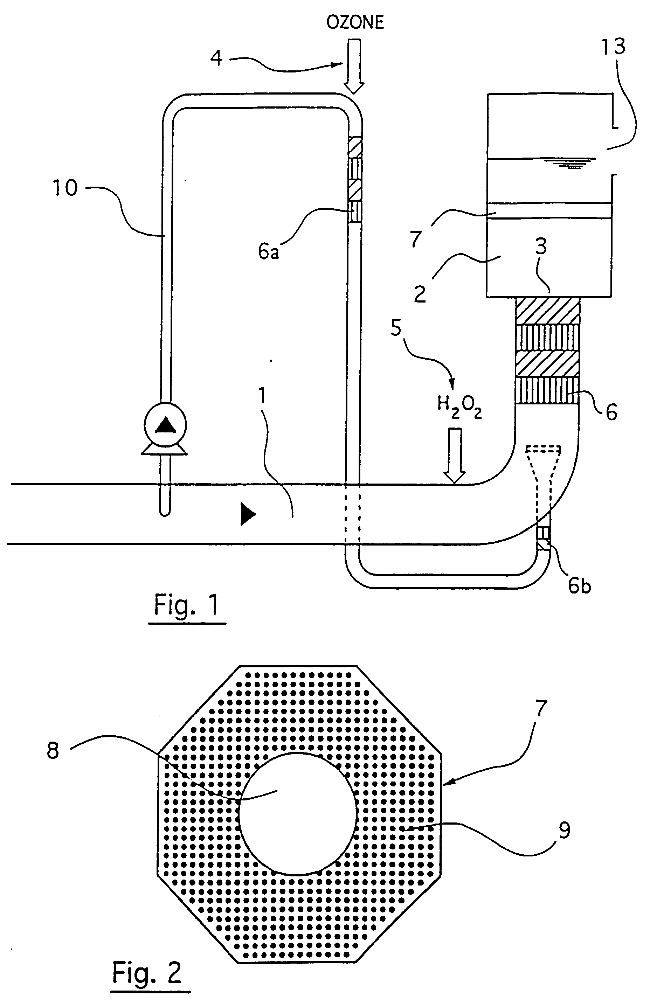

La figure 1 présente les différents éléments d'une installation pour l'élimination des micro-polluants d'eaux brutes constituées par des eaux de forage. Ces eaux de forage présentent une certaine teneur en pesticides et plus particulièrement en atrazine.

Selon l'invention, l'installation comprend une canalisation principale 1 d'amenée des eaux brutes de forage dans un réacteur 2. Cette canalisation principale est équipée d'une boucle de dérivation formant une canalisation auxiliaire 10 et ayant pour objet d'amener les eaux brutes de forage vers le réacteur 2 jusqu'à un certain seuil de débit de celles-ci. Dans le cadre de la réalisation du présent exemple, la canalisation 10 est conçue de façon à travailler à un débit fixe de 400 m³ par heure.

L'installation représentée à la figure 1 a été dimensionnée pour permettre le traitement d'eaux brutes présentant un débit pouvant aller de 500 m³ jusqu'à 3 500 m³ par heure. Quelque soit le débit des eaux à traiter, l'ozone est injectée en totalité au niveau de la boucle de dérivation.

Afin de permettre l'élimination des micro-polluants contenus dans les eaux de forage à traiter, et notamment l'élimination ou la quasi-élimination des pesticides, l'installation est munie :
- de moyens d'injection d'ozone 4 ;
- de moyens d'injection de peroxyde d'hydrogène 5 ;
- et d'un système de transfert gaz/liquide constitué par un mélangeur statique principal 6 situé sur la canalisation principale 1 et par deux mélangeurs statiques 6a, 6b situés sur la canalisation auxiliaire 10.

Conformément à l'invention, les moyens d'injection d'ozone 4 et les moyens d'injection de peroxyde d'hydrogène sont situés en amont du mélangeur statique principal 6.

Selon une caractéristique préférentielle de l'invention, les moyens d'injection d'ozone dans les eaux brutes sont installées au niveau de la canalisation auxiliaire 10. Ainsi, cette canalisation auxiliaire 10 constitue une boucle de surozonation. Dans tous les cas, la quantité d'ozone est suffisante pour traiter, en combinaison avec la quantité de peroxyde d'hydrogène les eaux de forage chargées en pesticides.

Par ailleurs, les moyens d'injection de peroxyde d'hydrogène dans les eaux brutes sont situés en amont des moyens d'injection d'ozone de façon à ce que le peroxyde d'hydrogène soit injecté dans les eaux brutes non ozonées. A cet effet, la canalisation auxiliaire 10 abouche dans la canalisation principale 1 en aval des moyens d'injection du peroxyde d'hydrogène, l'injection d'ozone ayant lieu dans cette canalisation auxiliaire 10.

Le mélangeur statique principal 6 est quant à lui monté à l'entrée de la canalisation principale 1 dans le réacteur 2. L'extrémité 3 de cette canalisation abouche dans la partie inférieure du réacteur 2.

Des moyens d'équirépartition du débit des eaux arrivant dans le réacteur constitués par une plaque noyée 7 sont par ailleurs prévus à une distance adéquate de l'extrémité 3 de la canalisation 1 de façon à réduire l'énergie cinétique des eaux ozonées résurgentes. Une telle plaque 7 permet d'homogénéiser les débits des eaux arrivant dans le réservoir 2 et ainsi de favoriser le dégazage et la réaction conduisant à la destruction de la micro-pollution organique contenue dans les eaux traitées.

Comme on peut le voir sur la figure 2, ladite plaque noyée 7 se présente sous la forme d'une plaque hexagonale présentant une partie centrale pleine 8 et une partie périphérique ajourée 9. La partie centrale pleine 8 présente un diamètre sensiblement équivalent au diamètre de la canalisation principale au niveau du réacteur 2. Par ailleurs, la plaque 7 présente une largeur sensiblement égale à la largeur du réacteur 2. Selon cette caractéristique, l'essentiel des eaux résurgentes de la canalisation principale 1 rencontre la plaque 7 et permet ainsi l'équirépartition de leur débit.

Les eaux traitées selon l'installation représentée à la figure 1 peuvent être débarrassées de l'essentiel de leur micro-pollution sans qu'il soit utile de construire un génie civil, tel qu'une colonne de contact en aval de cette installation. Une telle installation concoure de plus à réduire considérablement le nombre de micro-organismes présents dans les eaux brutes de forage et ainsi de désinfecter celles-ci.

Selon l'invention, la formation du mélange eaux à traiter + ozone + peroxyde d'hydrogène en amont du réacteur, c'est-à-dire de façon prématurée, et l'utilisation de mélangeurs statiques, également en amont de ce réacteur, permettent aux produits oxydants constitués par l'ozone et le peroxyde d'hydrogène d'agir très tôt. La plaque noyée 7 d'équirépartition des débits permet de plus de favoriser l'homogénéisation des eaux ozonées et peroxydées de façon à favoriser à accroître le dégazage et ainsi d'optimiser l'élimination des micro-polluants.

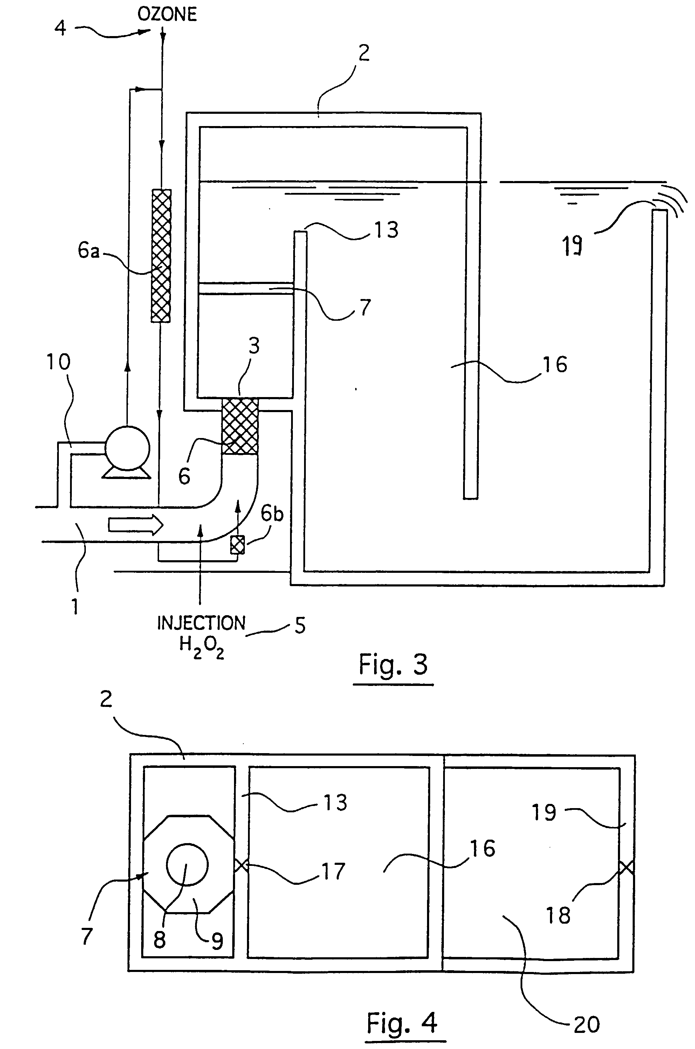

Selon un autre mode de réalisation représenté aux figures 3 et 4, une installation sensiblement identique à celle représentée à la figure 1 est construite en amont d'un génie civil de faible dimensionnement constitué par une colonne de contact à deux compartiments 16, 20 permettant de pousser l'élimination des résiduels d'ozone présents dans les eaux traitées. Pour un débit d'eau de 3 500 m³ par heure, la hauteur d'eau dans cette colonne de contact est d'environ 5,50m.

Selon la figure 4, des points de piquage 17 et 18 situés respectivement au niveau du déversoir 13 du réacteur 2 et au niveau du déversoir 19 du deuxième compartiment 20 de la colonne de contact sont prévus de façon à mesurer les taux de concentration en résiduels d'ozone et en atrazine des eaux traitées.

Le réacteur 2 est muni d'un destructeur thermique non représenté permettant d'éliminer l'ozone gazeux émanant des eaux ozonées présentes dans le réacteur 2. Le taux de transfert d'ozone, calculé à partir des quantités d'ozone injectées et des quantités d'ozone détruites par le destructeur thermique est sensiblement constant et égal à 90 pour cent.

L'installation représentée aux figures 2 et 3 a été testées en utilisant un taux de traitement en ozone moyen variant de 2,1 à 4,8 g/m³ pour un ratio H₂O₂/O₃ allant de 0,4 g/g à 0,6 g/g.

Les résultats concernant l'abattement de l'atrazine à la sortie du réacteur, mesurés au point de piquage 18 sont donnés dans le tableau I ci-dessous. Ce tableau mentionne pour chaque essai, le débit des eaux, le taux de traitement en ozone, le ratio H₂O₂/O₃, la teneur en atrazine des eaux brutes EB et la teneur en atrazine des eaux traitées ET à la sortie du réacteur 2, ainsi que le taux d'abattement obtenu.

**Tableau I**

| Essai n° | Q eau m³/H | Taux de traitement ozone (g/m³) | Ratio H₂0₂/0₃ (g/g) | EB Atrazine (ng/l) | ET Atrazine (ng/l) | Taux d'abattement % |
|---|---|---|---|---|---|---|
| 1 | 1750 | 2,5 | 0,6 | 235 | 40 | 82 |
| 2 | 920 | 4,8 | 0,4 | 235 | < 40 | 82 |
| 3 | 1700 | 2,6 | 0,4 | 235 | < 40 | 82 |
| 4 | 2080 | 2,3 | 0,6 | 220 | 40 | 81 |
| 5 | 1800 | 2,1 | 0,6 | 220 | 40 | 81 |
| 6 | 1300 | 3,3 | 0,6 | 210 | 40 | 81 |
| 7 | 650 | 2,2 | 0,6 | 210 | 40 | 81 |
| 8 | 2100 | 2,9 | 0,6 | 215 | < 40 | 81 |

Ce tableau permet de constater que, pour un ratio H₂O₂/O₃ variant peu, et pour des débits variant du simple au triple, on obtient un abattement important, de plus de 80%, à la sortie même du réacteur 2. Des mesures complémentaires de la teneur en atrazine au niveau du point de piquage 17 de la colonne de contact construite en aval du réacteur 2, correspondant à un temps de contact plus court, laisse apparaître que l'amélioration du taux d'abattement d'atrazine reste minime. Ainsi, des mesures du taux d'atrazine au niveau du point de piquage 17 donne une concentration en atrazine de seulement 60 ng/l. Ceci prouve que l'essentiel de la micro-pollution organique est détruite lors du passage des eaux brutes dans le réacteur.

Le temps de passage de ces eaux brutes dans ce réacteur est très réduit puisqu'il n'est que de 0,38 mn. En conséquence, l'installation selon l'invention présente donc un avantage très important par rapport aux différents dispositifs de l'état de la technique qui nécessitent tous des temps de contact avec l'ozone beaucoup plus importants et de l'ordre de 10 minutes.

L'installation permet donc d'aboutir à un abattement quasi-instantané de l'atrazine même pour des débits importants. Le génie civil chicané 16 construit en aval du réacteur 2 n'a donc pour seul effet que de réduire la teneur des eaux traitées en résiduels d'ozone. Le tableau II suivant montre, pour chacun des essais 1 à 8 effectués, les quantités résiduelles d'ozone mesuré aux points de piquage 17 et 18 (voir figure 4) dans les eaux traitées, situées respectivement au niveau du déversoir 13 du réacteur 2 et du déversoir 19 du compartiment 20 de la colonne de contact. Excepté pour les résultats de l'essai n°1 et de l'essai n° 5, on constate que le génie civil de faible dimensionnement permet d'abattre sensiblement la teneur résiduelle des eaux traitées en ozone dissous.

**Tableau II**

| Essai N° | Point de piquage | 0₃ résiduel g/m₃ |
|---|---|---|
| 1 | 17 | 0,43 |
| | 18 | 0,54 |
| 2 | 17 | 0,41 |
| | 18 | 0,20 |
| 3 | 17 | 0,60 |
| | 18 | 0,52 |
| 4 | 17 | 0,28 |
| | 18 | 0,28 |
| 5 | 17 | 0,36 |
| | 18 | - |
| 6 | 17 | 0,47 |
| | 18 | 0,41 |
| 7 | 17 | 0,36 |
| | 18 | 0,25 |
| 8 | 17 | 0,52 |
| | 18 | 0,37 |

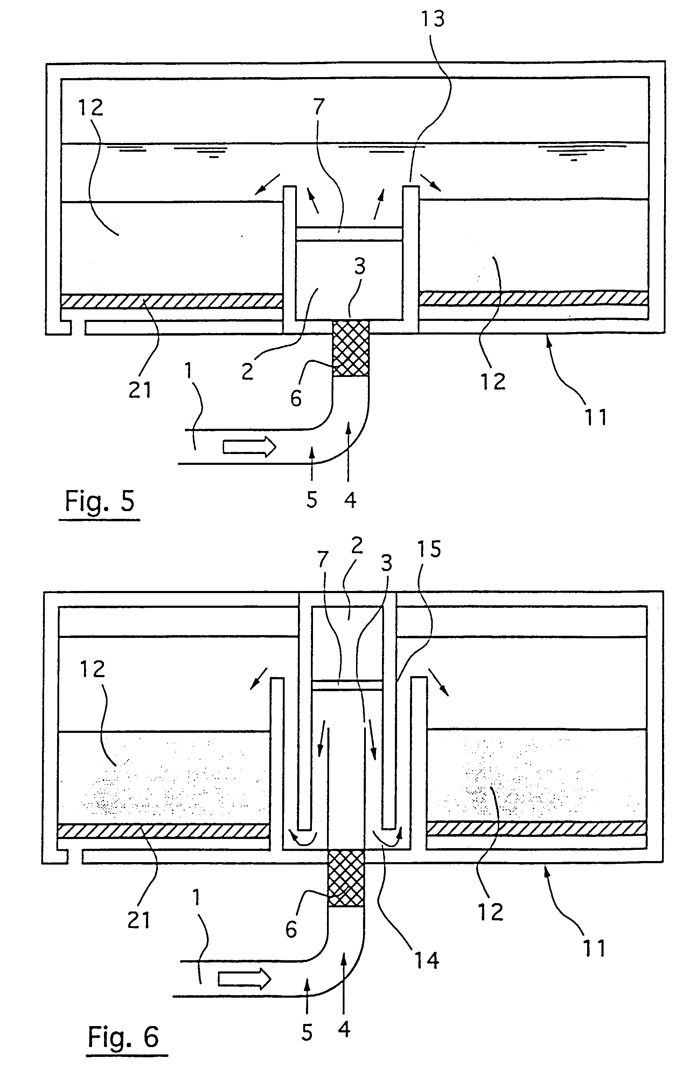

Selon les figures 5 et 6, l'installation selon la présente invention peut comprendre également une unité de filtration 11 construite en aval du réacteur 2 et permettant d'accroître encore le taux d'élimination de la micro-pollution organique contenue dans les eaux traitées.

Selon la figure 5, une installation du type de celle représentée à la figure 1 est équipée d'une unité de filtration 11 comprenant une couche de charbon actif en grains et un plancher filtrant 21. Cette unité de filtration est disposée concentriquement au réacteur 2, le réacteur 2 formant alors une chambre centrale et l'unité de filtration constituant une chambre annulaire. Le fonctionnement de la couche de charbon actif utilisé est classique

Les eaux sortant du réacteur 2 et présentant un débit sensiblement constant grâce à la plaque noyée 7 se déversent par le déversoir 13 dans l'unité de filtrati 11. Les eaux traitées observent donc un mouvement ascendant dans le réacteur puis un mouvement descendant à travers la couche de charbon actif 12.

Selon encore un autre mode de réalisation de l'installation selon présente invention, représenté à la figure 6, la canalisation principale abouche dans la partie supérieure du réacteur 2 qui présente un passage 14 d'évacuation des ea traitées dans sa partie inférieure. A l'image du mode de réalisation représenté à figure 5, l'installation présente une unité de filtration 11 organisée sous forme d'u chambre annulaire disposée autour du réacteur 2 et comprenant une couche de charbon actif en grains 12 et un plancher filtrant 21. La paroi séparant le réacteur 2 de l'unité de filtration 11 est une paroi siphoïde 15. Les eaux traitées issues du réacteur 2 transitent par l'ouverture 14, remontent dans la paroi siphoïde 15 et se déversent dans la partie supérieure de l'unité de filtration 11. En conséquence, les eaux traitées ont un mouvement descendant dans le réacteur 2 et un mouvement également descendant dans l'unité de filtration 11.

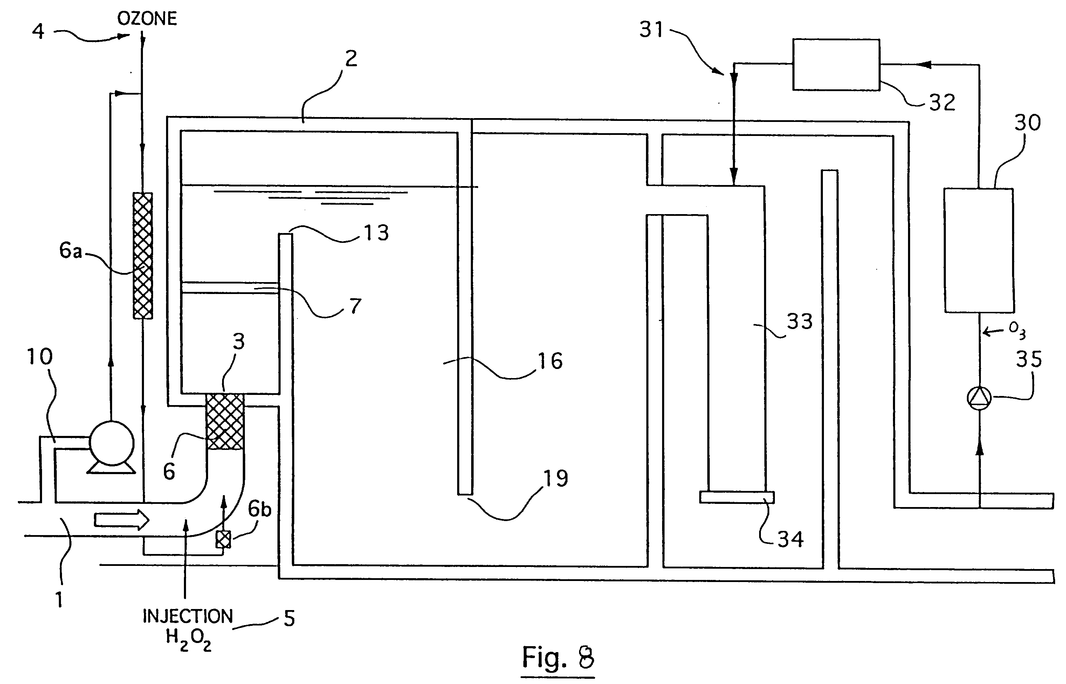

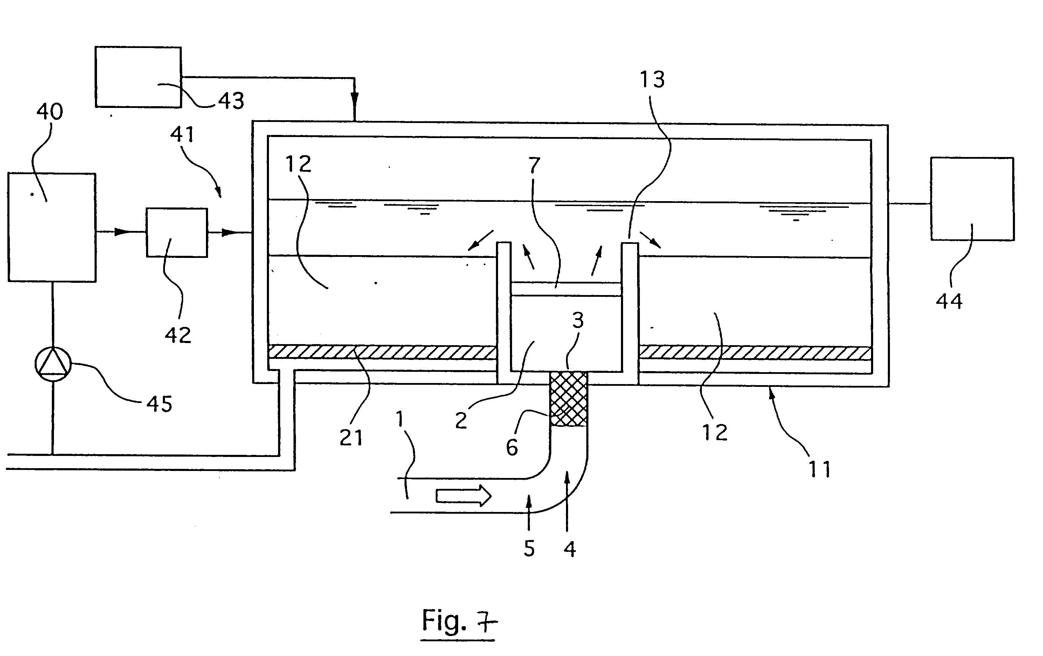

Selon le mode de réalisation de l'invention représenté à la figure 7, l'installation inclut une unité de filtration et est conçue de façon à pouvoir faire flotter dans le réacteur 2 des polluants tels que les composés minéraux et comprend à cet effet :
- des moyens de production 40 d'eau sursaturée en ozone, à partir de l'eau sortant du réacteur 2,
- des moyens d'introduction 41 de l'eau sursaturée formée, dans le réacteur 2,
- des moyens d'introduction 43 d'au moins une substance coagulante dans le réacteur 2, et,
- des moyens d'évacuation 44 des flocs formés à la surface du réacteur.

Une partie de l'eau sortant du réacteur est pompée grâce à une pompe 45 vers les moyens de sursaturation en ozone.

Les moyens d'introduction de l'eau sursaturée en ozone ainsi formée comprennent un détendeur 42 permettant la formation de micro-bulles d'ozone qui combinées à l'action de la substance coagulante permet de faire flotter les polluants tels que les métaux, qui sont ensuite évacués grâce aux moyens 44. Les flocs formés ne risquent alors plus de venir colmater l'unité de filtration 12.

On notera que, pour permettre une bonne action des micro-bulles, le détendeur 42 devra être prévu le plus près possible du point d'introduction de l'eau sursaturée en ozone dans le réacteur 2.

Selon un autre mode de réalisation représentée à la figure 8, l'installation n'inclut pas d'unité de filtration et comprend des moyens 30 de sursaturation en ozone d'une partie de l'eau sortant de l'installation. Cette eau est pompée grâce à la pompe 35.

L'installation comprend par ailleurs des moyens 31 de réintroduction de cette eau sursaturée en ozone dans l'eau sortant du réacteur 2. Ces moyens de réintroduction comprennent un détendeur 32, permettant de former des micro-bulles d'ozone dans l'eau traitée. L'installation comprend ainsi deux points d'injection d'ozone, l'un en amont du réacteur, l'autre en aval, ce qui peut se révéler particulièrement intéressant, notamment lorsque l'installation n'inclut pas d'unité de filtration et que l'ozone est rapidement consommé, dans le cas de cinétiques rapides.

Afin de permettre l'introduction de l'eau sursaturée en ozone dans l'eau traitée, la sortie du réacteur est équipée d'une canalisation 33 par laquelle l'intégralité de l'eau traitée passe. Cette canalisation 33 qui entraine l'eau traitée vers le bas est pourvue d'un organe de dispersion 34 constitué par une plaque trouée. On pourra également choisir de munir l'extrémité de la canalisation 33 d'un mélangeur statique ou de prévoir un poreux pour distribuer les microbulles d'ozone formées à partir de l'eau sursaturée en ozone. On notera, que pour permettre une bonne action des micro-bulles d'ozone, on placera le détendeur le plus près possible de la canalisation 33.

Les différents modes de réalisation de l'installation selon la présente invention décrite en références aux figures 1 à 8 n'ont pas pour objet de limiter la portée de celle-ci. En particulier, il pourra être envisagé d'utiliser d'autres unités de filtration complémentaires que les unités de filtration à charbon actif en grains et éventuellement de coupler le traitement des eaux brutes décrit à un traitement subséquent, tel qu'une chloration. Il pourra également être envisagé d'utiliser un mélangeur statique dans une position autre que verticale.

## Revendications

1. Installation pour le traitement des eaux brutes, notamment des eaux de forage, permettant d'éliminer au moins partiellement les micropolluants contenus dans lesdites eaux, caractérisée en ce qu'elle comprend :
- au moins une canalisation principale d'amenée (1) desdites eaux dans la partie inférieure d'un réacteur (2), l'extrémité de la canalisation (1) abouchant dans ledit réacteur (2) formant un déversoir noyé (3);
- des moyens d'injection d'ozone (4) dans lesdites eaux communiquant avec ladite canalisation principale (1) ;
- des moyens d'injection de peroxyde d'hydrogène (5) dans lesdites eaux communiquant avec ladite canalisation principale (1) ;
- au moins un système de transfert de gaz liquide comprenant au moins un mélangeur statique (6), ledit mélangeur statique (6) étant situé en aval desdits moyens d'injection d'ozone (4) et desdits moyens d'injection de peroxyde d'hydrogène (5) et en amont dudit réacteur (2) ; et
- des moyens permettant d'équirépartir le débit des eaux résurgentes de ladite canalisation d'amenée (1) au niveau du déversoir (3), lesdits moyens d'équirépartition autorisant une diminution de l'énergie cinétique desdites eaux lors de leur arrivée dans ledit réacteur (2).

2. Installation selon la revendication 1 caractérisée en ce que lesdits moyens d'équirépartition sont constitués par une plaque noyée (7) fixée au-dessus dudit déversoir (3) essentiellement perpendiculairement à la direction d'arrivée des eaux dans ledit réacteur (2), ladite plaque présentant d'une part une largeur essentiellement égale à celle du réacteur et présentant d'autre part une partie centrale pleine (8) et une couronne périphérique (9) ajourée, ladite partie centrale pleine (8) étant placée essentiellement en regard de ladite canalisation d'amenée (1) des eaux dans ledit réacteur (2).

3. Installation selon la revendication 2 caractérisée en ce que ladite partie centrale pleine (8) de ladite plaque noyée (7) présente un diamètre sensiblement égal à celui de ladite canalisation d'amenée (1) des eaux dans ledit réacteur (2).

4. Installation selon l'une des revendications 1 à 3 caractérisée en ce que lesdits moyens d'injection de peroxyde d'hydrogène (5) sont placés en amont desdits moyens d'injection d'ozone (4), de façon telle que l'injection de peroxyde d'hydrogène puisse être effectuée sur les eaux brutes non-ozonées.

5. Installation selon l'une des revendications 1 à 4 caractérisée en ce qu'elle inclut une boucle de dérivation communiquant avec ladite canalisation principale d'amenée (1) desdites eaux dans ledit réacteur (2), ladite boucle constituant une canalisation auxiliaire (10) d'amenée desdites eaux dans ledit réacteur (2), ladite canalisation auxiliaire (10) assurant l'amenée desdites eaux dans ledit réacteur (2) jusqu'à une valeur seuil de débit de celles-ci, ladite canalisation principale (1) assurant l'amenée desdites eaux dans ledit réacteur (2) dès que le débit desdites eaux est supérieur audit seuil.

6. Installation selon la revendication 5 caractérisée en ce que lesdits moyens d'injection d'ozone (4) sont installés au niveau de ladite canalisation auxiliaire (10).

7. Installation selon l'une des revendications 1 à 6 caractérisée en ce que lesdits moyens d'injection d'ozone (4) et lesdits moyens d'injection de peroxyde d'hydrogène (5) permettent l'injection de ces deux composés dans lesdites eaux selon un ratio pondéral H₂O₂/O₃ constant.

8. Installation selon l'une des revendications 1 à 7 caractérisée en ce que ledit ratio pondéral H₂O₂/O₃ est au moins égal à 0,3 g/g.

9. Installation selon l'une des revendications 1 à 8 caractérisée en ce qu'elle comprend une unité de filtration (11) positionnée en aval dudit réacteur, ladite unité de filtration (11) permettant d'accroître le taux d'élimination des micropolluants dans les eaux traitées.

10. Installation selon la revendication 9 caractérisée en ce que ladite unité de filtration (11) comprend une ou plusieurs couches de charbon actif en grains (12), la micro-pollution résiduelle contenue dans les eaux sortant dudit réacteur (2) pouvant alors être retenue par adsorption sur lesdits grains.

11. Installation selon l'une des revendications 9 ou 10 caractérisée en ce que ladite unité de filtration (11) est positionnée de façon cocylindrique audit réacteur (2) ledit réacteur formant une première chambre centrale et ladite unité de filtration (11) formant une seconde chambre annulaire.

12. Installation selon l'une des revendications 9 à 11 caractérisée en ce que l'extrémité (3) de ladite canalisation (1) abouche dans la partie inférieure dudit réacteur (2) et en ce que ledit réacteur est équipé dans sa partie supérieure d 'un déversoir (13) permettant d'amener les eaux brutes traitées dans ledit réacteur (2) vers ladite unité de filtration (11) de façon telle que les eaux traitées puissent observer un mouvement ascendant dans ledit réacteur (2) et un mouvement descendant dans ladite unité de filtration (11).

13. Installation selon la revendication 12 caractérisé en ce que ladite canalisation (1) arrive dans le réacteur (2) par le haut de celui-ci.

14. Installation selon l'une des revendications 9 à 11 caractérisée en ce que l'extrémité (3) de ladite canalisation d'amenée (1) des eaux ozonées dans ledit réacteur (2) est installée dans la partie supérieure du réacteur (2) et en ce qu'un passage (14) des eaux sortant dudit réacteur (2) vers l'unité de filtration (11) est aménagé dans le fond dudit réacteur (2) de façon telle que les eaux traitées observent un mouvement descendant dans ledit réacteur et un mouvement ascendant dans ladite unité de filtration (11).

15. Installation selon la revendication 14 caractérisé en ce que ladite canalisation (1) arrive dans le réacteur (2) par le haut de celui-ci.

16. Installation selon l'une des revendication 9 à 11 caractérisée en ce que la paroi séparant ledit réacteur (2) de ladite unité de filtration (11) forme une paroi siphoïde (15) de façon à conférer aux eaux traitées un mouvement descendant dans ledit réacteur (2) et également un mouvement descendant dans ladite unité de filtration (11).

17. Installation selon l'une des revendication 9 à 11 caractérisée en ce que la paroi séparant ledit réacteur (2) de ladite unité de filtration (11) forme une paroi siphoïde de façon à conférer aux eaux traitées un mouvement ascendant dans ledit réacteur (2) et également un mouvement ascendant dans ladite unité de filtration (11).

18. Installation selon l'une des revendications 1 à 17 caractérisée en ce que lesdits moyens d'injection de peroxyde d'hydrogène (5) comprennent un organe de dilution dynamique ou statique permettant d'injecter du peroxyde d'hydrogène dilué dans lesdites eaux.

19. Installation selon l'une des revendications 1 à 18 caractérisé en ce qu'elle comprend :
- des moyens de production (40) d'eau sursaturée en ozone,
- des moyens d'introduction (41) de l'eau sursaturée formée, dans le réacteur (2),
- des moyens d'introduction 43 d'au moins une substance coagulante dans le réacteur (2), et,
- des moyens d'évacuation (44) des flocs formés à la surface du réacteur.

20. Installation selon l'une des revendications 1 à 8 caractérisée en ce qu'elle comprend des moyens de sursaturation en ozone (30) d'au moins une partie de l'eau traitée sortant de ladite installation et des moyens d'injection d'eau sursaturée en ozone (31) dans l'eau.

21. Installation selon l'une des revendications 1 à 20 caractérisé en ce qu'elle comprend des moyens de mise sous pression de l'eau à traiter dans ledit réacteur (2) travaillant alors sous pression, et éventuellement dans ladite unité de filtration (11).

## Patentansprüche

1. Anlage zur Behandlung von Wasser. insbesondere aus Bohrungen, mit der mindestens ein Teil der Feinverschmutzungen aus dem Wasser entfernt werden kann,
dadurch gekennzeichnet. daß sie folgendes umfaßt:
- mindestens eine Hauptzufuhrleitung (1) zum Einlassen des Wassers in den unteren Teil eines Reaktors (2). wobei das Ende der Leitung (1) derart in den Reaktor (2) mündet, daß es einen unter Wasser liegenden Überlauf (3) bildet;
- Mittel zum Einleiten von Ozon (4) in das Wasser. die mit der Hauptzufuhrleitung (1) in Verbindung stehen;
- Mittel zum Einleiten von Wasserstoffperoxyd (5) in das Abwasser. die mit der Hauptzufuhrleitung (1) in Verbindung stehen;
- mindestens ein Transfersystem für Flüssiggas, das über mindestens eine statische Mischvorrichtung (6) verfügt. welche sich stromabwärts der Einleitungen für Ozon (4) und für Wasserstoffperoxyd (5) sowie stromaufwärts des Reaktors (2) befinden;
- Mittel zur gleichmäßigen Verteilung des aus der Hauptzufuhrleitung (1) auf der Ebene des Überlaufes (3) heraufkommenden Wassers, wobei diese Verteilungsmittel eine Verringerung der kinetischen Energie des Wassers bei ihrer Ankunft in dem Reaktor (2) ermöglichen.

2. Anlage gemäß Anspruch 1,
dadurch gekennzeichnet, daß die Mittel zur gleichmäßigen Verteilung aus einer unter Wasser liegenden Platte (7) bestehen, die im wesentlichen senkrecht zur Ankunftsrichtung des Wassers in den Reaktor (2) oberhalb des Überlaufs (3) angebracht ist, wobei die Platte so breit wie der Reaktor ist und einen vollen mittleren Teil (8) sowie einen gelochten Umfangskranz (9) hat. wobei der volle mittlere Teil (8) gegenüber der Hauptzufuhrleitung (1) des Wassers in den Reaktor (2) liegt.

3. Anlage gemäß Anspruch 2,
dadurch gekennzeichnet, daß der volle mittlere Teil (8) der unter Wasser liegenden Platte (7) in etwa den gleichen Durchmesser hat wie die Hauptzufuhrleitung (1) des Wassers in den Reaktor (2).

4. Anlage gemäß einem der Ansprüche 1 bis 3.
dadurch gekennzeichnet, daß sich die Einleitung für das Wasserstoffperoxyd (5) stromaufwärts der Ozoneinleitung (4) befindet, so daß das Wasserstoffperoxyd in das Wasser eingeleitet wird, in das noch ozonfreie Wasser eingeleitet wird.

5. Anlage gemäß einem der Ansprüche 1 bis 4,
dadurch gekennzeichnet, daß sie eine Leitungsschleife umfaßt, die mit der Hauptzufuhrleitung (1) des Wassers in den Reaktor (2) verbunden ist, wobei diese Leitungsschleife eine Hilfsleitung (10) zum Einleiten des Wassers in den Reaktor (2) darstellt, wobei sie das Einleiten des Wassers in den Reaktor (2) bis zu einem Durchsatzschwellenwert gewährleistet und wobei die Hauptzufuhrleitung (1) das Wasser in den Reaktor (2) einleitet sobald der Wasserdurchsatz den Schwellenwert übertrifft.

6. Anlage gemäß Anspruch 5,
dadurch gekennzeichnet, daß die Ozoneinleitung (4) auf der Höhe der Hilfsleitung (10) angebracht ist.

7. Anlage gemäß einem der Ansprüche 1 bis 6,
dadurch gekennzeichnet. daß die Ozoneinleitung (4) und die Wasserstoffperoxydeinleitung (5) das Einleiten dieser zwei Verbindungen in das Wasser mit einem konstanten Gewichtsverhältnis H₂O₂/O₃ gewährleisten.

8. Anlage gemäß einem der Ansprüche 1 bis 7,
dadurch gekennzeichnet, daß das Gewichtsverhältnis H₂O₂/O₃ mindestens gleich 0,3 g/g ist.

9. Anlage gemäß einem der Ansprüche 1 bis 8.
dadurch gekennzeichnet, daß sie eine Filtereinheit (11) umfaßt, die sich stromabwärts vom Reaktor befindet, wobei die Filtereinheit (11) eine Erhöhung der Entfernungsrate der Feinverschmutzungen aus dem behandelten Wasser ermöglicht.

10. Anlage gemäß Anspruch 9,
dadurch gekennzeichnet. daß die Filtereinheit (11) eine oder mehrere Schichten körniger Aktivkohle (12) umfaßt. wobei die im Wasser am Ausgang des Reaktors (2) noch verbleibende Feinverschmutzung durch Adsorption an den Körnern zurückgehalten wird.

11. Anlage gemäß einem der Ansprüche 9 oder 10,
dadurch gekennzeichnet, daß die Filtereinheit (11) zylindrisch zentriert um den Reaktor (2) liegt, wobei der Reaktor eine erste Mittelkammer und die Filtereinheit (11) eine zweite, ringförmige Kammer bildet.

12. Anlage gemäß einem der Ansprüche 9 bis 11.
dadurch gekennzeichnet, daß das Ende der Hauptzufuhrleitung (1) im unteren Teil des Reaktors (2) mündet und, daß der obere Teil des Reaktors einen Überlauf (13) hat, der das Einleiten des in dem Reaktor (2) behandelten Wassers in die Filtereinheit (11) derart ermöglicht, daß das behandelte Wasser im Reaktor (2) steigt und in der Filtereinheit (11) nach unten fließt.

13. Anlage gemäß Anspruch 12,
dadurch gekennzeichnet, daß die Leitung (1) in den oberen Teil des Reaktors (2) einmündet.

14. Anlage gemäß einem der Ansprüche 9 bis 11.
dadurch gekennzeichnet, daß das Ende der Zufuhrleitung (1) des mit Ozon versetzten Wassers in den Reaktor (2) am oberen Teil des Reaktors (2) angebracht ist und das ein Durchgang (14) für das aus dem Reaktor in die Filtereinheit (11) fließenden Wassers im unteren Teil des Reaktors (2) angebracht ist, damit das behandelte Wasser im Reaktor nach unten fließt und in der Filtereinheit (11) steigt.

15. Anlage gemäß Anspruch 14,
dadurch gekennzeichnet, daß die Zufuhrleitung (1) im oberen Teil des Reaktors (2) einmündet.

16. Anlage gemäß einem der Ansprüche 9 bis 11.
dadurch gekennzeichnet, daß die Trennwand zwischen dem Reaktor (2) und der Filtereinheit (11) eine siphonförmige Wand (15) bildet, damit das behandelte Wasser sowohl im Reaktor (2) als auch in der Filtereinheit (11) nach unten fließt.

17. Anlage gemäß einem der Ansprüche 9 bis 11.
dadurch gekennzeichnet, daß die Trennwand zwischen dem Reaktor (2) und der Filtereinheit (11) eine siphonförmige Wand (15) bildet, damit das behandelte Wasser sowohl im Reaktor (2) als auch in der Filtereinheit (11) steigt.

18. Anlage gemäß einem der Ansprüche 1 bis 17,
dadurch gekennzeichnet, daß die Wasserstoffperoxydeinleitung (5) ein Organ zur dynamischen oder statischen Verdünnung umfaßt, um das Einleiten von verdünntem Wasserstoffperoxyd in das Wasser zu ermöglichen.

19. Anlage gemäß einem der Ansprüche 1 bis 18,
dadurch gekennzeichnet, daß sie folgendes umfaßt:
- Mittel (40) zur Herstellung von an Ozon übersättigtem Wasser.
- Mittel (41) zum Einleiten des an Ozon übersättigten Wassers in den Reaktor (2).
- Mittel (43) zum Einleiten mindestens eines koagulierenden Stoffes in den Reaktor (2) und
- Mittel (44) zum Entfernen der an der Oberfläche des Reaktors gebildeten Ausflockungen.

20. Anlage gemäß einem der Ansprüche 1 bis 8,
dadurch gekennzeichnet, daß sie über Mittel (30) verfügt, um mindestens einen Teil des aus der Anlage fließenden Wassers mit Ozon zu übersättigen sowie über Mittel (31) zum Einleiten von an Ozon übersättigtem Wasser in das Wasser.

21. Anlage gemäß einem der Ansprüche 1 bis 20,
dadurch gekennzeichnet, daß sie über Mittel verfügt, um das im Reaktor (2) zu behandelnde Wasser unter Druck zu setzen, wobei der Reaktor dann unter Druck arbeitet, sowie eventuell über Mittel, um das Wasser in der Filtereinheit (11) unter Druck zu setzen.

## Claims

1. Installation for the treatment of raw water, in particular drilling water, enabling the micropollutants contained in the said water to be removed, at least partially, characterized in that it comprises :
- at least one main pipe (1) for feeding the said water into the lower part of a reactor (2), the end of the feed pipe (1) which joins the said reactor (2) forming a submerged outlet (3);
- means for injecting ozone (4) into the said water communicating with the said main feed pipe (1);
- means for injecting hydrogen peroxide (5) into the said water communicating with the said main feed pipe (1);
- at least one gas-liquid transfer system comprising at least one static mixer (6), the said static mixer (6) being situated downstream from the said means for injecting ozone (4) and the said means for injecting hydrogen peroxide (5) and upstream from the said reactor (2); and
- means enabling equal distribution to take place of the flow of resurgent water from the said feed pipe (1) at the outlet (3), the said means of equal distribution permitting a reduction in the kinetic energy of the said water when it arrives in the said reactor (2).

2. Installation according to claim 1, characterized in that the said means of equal distribution consist of a submerged plate (7) fixed above the said outlet (3) essentially perpendicularly to the direction of arrival of the water into the said reactor (2), the said plate having on the one hand a width essentially equal to that of the reactor and having on the other hand a solid central part (8) and an open-worked peripheral ring (9), the said solid central part (8) being placed essentially to face the said pipe (1) for feeding water to the said reactor (2).

3. Installation according to claim 2, characterized in that the said solid central part (8) of the said submerged plate (7) has a diameter substantially equal to that of the said pipe (1) for feeding water to the said reactor (2).

4. Installation according to one of claims 1 to 3, characterized in that the said means for injecting hydrogen peroxide (5) are placed upstream from the said means for injecting ozone (4), so that hydrogen peroxide can be injected into raw, non-ozonized water.

5. Installation according to one of claims 1 to 4, characterized in that it includes a bypass loop communicating with the main pipe (1) feeding the said water into the said reactor (2), the said loop consisting of an auxiliary pipe (10) feeding water into the said reactor (2), the said auxiliary pipe (10) ensuring that the said water is fed into the said reactor (2) up to a threshold value of the flow rate of this water, the said main feed pipe (1) ensuring that the said water is fed into the said reactor (2) as soon as the flow rate of the said water is greater than the said threshold.

6. Installation according to claim 5, characterized in that the said means for injecting ozone (4) are installed at the said auxiliary feed pipe (10).

7. Installation according to one of claims 1 to 6, characterized in that the said means for injecting ozone (4) and the said means for injecting hydrogen peroxide (5) enable these two compounds to be injected into the said water at a constant H₂O₂/O₃ weight ratio.

8. Installation according to one of claims 1 to 7, characterized in that the said H₂O₂/O₃ weight ratio is at least equal to 0.3 g/g.

9. Installation according to one of claims 1 to 8, characterized in that it comprises a filtration unit (11) positioned downstream from the said reactor, the said filtration unit (11) making it possible to increase the rate of removal of micropollutants from the treated water.

10. Installation according to claim 9, characterized in that the said filtration unit (11) comprises one or more layers of active granular carbon (12), it being then possible for the residual micropollution contained in the water leaving the said reactor (2) to be retained by adsorption on the said grains.

11. Installation according to either of claims 9 or 10, characterized in that the said filtration unit (11) is positioned co-cylindrically with respect to the said reactor (2), the said reactor forming a first central chamber and the said filtration unit (11) forming a second annular chamber.

12. Installation according to one of claims 9 to 11, characterized in that the end (3) of the said feed pipe (1) joins the lower part of the said reactor (2) and in that the said reactor is provided in its upper part with an outlet (13) enabling the raw water treated in the said reactor (2) to be conveyed to the said filtration unit (11) in such a way that the treated water can undergo an ascending motion in the said reactor (2) and a descending motion in the said filtration unit (11).

13. Installation according to claim 12, characterized in that the said feed pipe (1) reaches the reactor (2) at the top of this reactor.

14. Installation according to one of claims 9 to 11, characterized in that the end (3) of the said pipe (1) feeding ozonized water into the said reactor (2) is fitted to the upper part of the reactor (2) and in that a passage (14) for water leaving the said reactor (2) towards the filtration unit (11) is provided at the bottom of the said reactor (2) in such a way that the treated water undergoes a descending motion in the said reactor and an ascending motion in the said filtration unit (11).

15. Installation according to claim 14, characterized in that the said feed pipe (1) reaches the reactor (2) at the top of this reactor.

16. Installation according to one of claims 9 to 11, characterized in that the wall separating the said reactor (2) from the said filtration unit (11) forms a siphon-shaped wall (15) so as to give the treated water a descending motion in the said reactor (2) and also a descending motion in the said filtration unit (11).

17. Installation according to one of claims 9 to 11, characterized in that the wall separating the said reactor (2) from the said filtration unit (11) forms a siphon-shaped wall (15) so as to give the treated water an ascending motion in the said reactor (2) and also an ascending motion in the said filtration unit (11).

18. Installation according to one of claims 1 to 17, characterized in that the said means for injecting hydrogen peroxide (5) comprises a dynamic or static dilution device enabling dilute hydrogen peroxide to be injected into the said water.

19. Installation according to one of claims 1 to 18, characterized in that it comprises :
- means (40) for producing water supersaturated with ozone,
- means (41) for introducing the supersaturated water formed, into the reactor (2),
- means (43) for introducing at least one coagulating substance into the reactor (2), and
- means (44) for removing the flocks formed from the surface of the reactor.

20. Installation according to one of claims 1 to 8, characterized in that it comprises means (30) for supersaturating at least part of the treated water leaving the said installation with ozone and means (31) for injecting the water supersaturated with ozone into the water.

21. Installation according to one of claims 1 to 20, characterized in that it comprises means for pressurizing the water to be treated in the said reactor (2), which then works under pressure, and possibly in the said filtration unit (11).
